# NEUE EUROPÄISCHE PATENTSCHRIFT

(11) **EP 2 812 766 B2**
(45) Veröffentlichungstag und Bekanntmachung des Hinweises auf die Entscheidung über den Einspruch: **17.06.2020**
(45) Hinweis auf die Patenterteilung: 14.06.2017
(21) Anmeldenummer: 13713066.2
(22) Anmeldetag: 08.02.2013
(51) Int. Cl.: G05D 1/02, B25J 5/00, B25J 9/16, B25J 11/00

(54) **VERFAHREN ZUM AUTOMATISCHEN AUSLÖSEN EINER SELBSTLOKALISIERUNG**
METHOD FOR AUTOMATICALLY TRIGGERING A SELF-POSITIONING PROCESS
PROCÉDÉ DE DÉCLENCHEMENT AUTOMATIQUE D'UNE AUTO-LOCALISATION

(30) Priorität: 08.02.2012 DE 102012201870
(43) Veröffentlichungstag der Anmeldung: 17.12.2014
(73) Patentinhaber: Robart GmbH, 4020 Linz (AT)
(72) Erfinder: ARTES, Harold, 4020 Linz (AT); SEETHALER, Dominik, 4020 Linz (AT); SCHAHPAR, Michael, 4020 Linz (AT)
(74) Vertreter: Westphal, Mussgnug & Partner Patentanwälte mbB
(86) Internationale Anmeldenummer: PCT/AT2013/050031
(87) Internationale Veröffentlichungsnummer: WO 2013/116887

(56) Entgegenhaltungen:
- EP-A1- 2 256 574
- WO-A1-2011/013862
- DE-B3-102007 010 979
- US-A1- 2003 030 398
- US-A1- 2005 182 518
- PATRIC JENSFELT ET AL: "Active Global Localization for a Mobile Robot Using Multiple Hypothesis Tracking", IEEE TRANSACTIONS ON ROBOTICS AND AUTOMATION, IEEE INC, NEW YORK, US, Bd. 17, Nr. 5, 5. Oktober 2001 (2001-10-05), XP011053629, ISSN: 1042-296X in der Anmeldung erwähnt
- SEONGSOO LEE et al.: "Vision-Based Kidnap Recovery with SLAM for Home Cleaning Robots", Journal of Intelligent & Robotic Systems, vol. 67, no. 1, 15 December 2011 (2011-12-15), pages 7-24,
- Se, S. et al: "Vision-based Global Localization and Mapping for Mobile Robots", IEEE Transactions on Robotics, vol. 21, no. 3, 6 January 2005 (2005-01-06), pages 364-375,

## Beschreibung

### Technisches Gebiet

Die vorliegende Beschreibung betrifft ein Verfahren zum automatischen Auslösen einer Selbstlokalisierung, insbesondere einer automatischen globalen Selbstlokalisierung eines selbstfahrenden autonomen Roboters (z.B. robotische Staubsauger).

### Hintergrund

Zahlreiche selbstfahrende Roboter zur Reinigung bzw. Bearbeitung von Bodenflächen sind bekannt und käuflich erhältlich. Grundsätzlich soll eine möglichst vollständige Bearbeitung der Bodenfläche in möglichst kurzer Zeit erreicht werden. Bei einfachen Systemen werden zufällige Navigationsverfahren verwendet (z.B. EP 2287697 A2 von iRobot Corp.), welche ohne Erstellung bzw. Verwendung einer Karte der Umgebung, in der sich die zu bearbeitende Bodenfläche befindet, auskommen. Das heißt, es wird keine Ortsinformation betreffend Hindernisse, Bodenflächenbegrenzungen, gereinigte/nicht gereinigte Bereiche, etc. verwendet. In Kombination mit lokalen Bewegungsstrategien wird bei einer Kollision mit einem Hindernis lediglich die Fahrtrichtung (zufällig) geändert. Dadurch nimmt man z.B. eine mehrfache Reinigung von Bodenflächen in Kauf ohne (in endlicher Zeit) eine Garantie für eine vollständige Reinigung der Bodenfläche abgeben zu können.

Die Publikation EP 2 256 574 A1 eine Technik zur Schätzung der eigenen Position und zur Erzeugung einer Umgebungskarte für einen autonomen mobilen Roboter. Die Publikation US 2003/030398 A1 beschreibt einen Service-Roboter mit einer gespeicherten Umgebungskarte, wobei zumindest einem Kartensegment eine Aufgabe zugeordnet ist. In der Publikation Jensfelt, P., Active Global Localization for a Mobile Robot Using Multiple Hypothesis Tracking, IEEE Trans. in Robotics and Automation, Bd. 17, Nr. 5, 5. Okt. 2001*,* wird ein propabilistischer Ansatz zur Lokalisierung eines mobilen Roboters beschrieben, wobei ein unvollständiges topologisches "Weltmodell" verwendet wird. In der Publikation DE 10 2007 010979 B3 ist ein Verfahren zur Reinigung einer Bodenfläche mittels eines Robotersaugers beschrieben. Der beschriebene Robotersauger ermittelt den Verschmutzungsgrad einzelner Bereiche der Bodenfläche aufgrund der dort während der Reinigung aufgenommenen und von der Sensoreinrichtung erfassten Staubmenge, speichert diese und steuert die Bearbeitungsintensität eines Bereichs in einem nachfolgenden Bearbeitungszyklus in Abhängigkeit von der gespeicherten Staubmenge dieses Bereichs .Bei jedem Saugen wird die gemessene Staubmenge zur Aktualisierung mit den vorhandenen Daten z.B. durch Mittelwertbildung oder einer anderen mathematischen Verknüpfung kombiniert werden, wodurch das System adaptiv und selbstlernend wird. Wird der Robotsauger in einen anderen Raum versetzt, wird nach kurzer Zeit eine massive Abweichung der neuen Daten von den alten festgestellt. Hierdurch erkennt die Steuereinheit den Raumwechsel und reagiert mit einer erneuten Lernfahrt mit einer vollständigen Absaugung mit maximaler Gebläseleistung und Bürstendrehzahl. Die Publikation US 2005/0182518 betrifft ebenfalls einen Saugroboter, der mittels eines Visual-SLAM- (VSLAM-) Verfahrens navigiert. Dabei können Fehler in der Odometrie des Roboters mittels einer Positionsschätzung basierend auf der (visuellen) Detektion von Landmarken korrigiert werden.

Kompliziertere Systeme erstellen eine Karte der Umgebung zur gezielten Pfadplanung und gezielten Reinigung der Bodenfläche mittels eines SLAM-Algorithmus (SLAM: "Simultaneous Localization and Mapping", "simultane Lokalisierung und Kartenerstellung"). Hierbei wird eine Karte und die Position des Roboters in der Karte mittels externer Sensoren (Laser-Range-Scanner, Triangulation mittels Kamera und Laser, Berührungssensoren, etc.) und inertialer Sensoren (odometrische Sensoren, Beschleunigungssensoren, etc.) ermittelt. Bei neueren Reinigungsrobotern, weiche ein derartiges SLAM-Modul verwenden, ist die erstellte Karte nicht-permanent, d.h. eine neue Karte wird für jeden neuen Reinigungsvorgang (d.h. nach Abschluss eines vorangegangen Reinigungsvorgangs) erstellt.

Im Gegensatz zu nicht-permanenten Karten ermöglicht die Verwendung permanent abgespeicherter Karten effizientere Bearbeitungsvorgänge, da eine wiederholte Erkundung der Umgebung nicht notwendig ist. Ein Bearbeitungsvorgang kann somit im Vornherein berechnet werden. Dabei können zusätzliche kartenbasierte Informationen ermittelt und wieder verwendet werden (z.B. Problembereiche, stark verschmutzte Bereiche, etc.). Aber auch benutzerspezifische Informationen wie beispielsweise Zimmerbezeichnungen, Bereiche die eine intensivere Reinigung benötigen oder gesperrte Bereiche, deren Eingabe bei nicht-permanenten Karten nicht sinnvoll wäre, können übernommen werden. In US 6,667,592 B2 von Intellibot wird beispielsweise eine gespeicherte/permanente Karte dazu verwendet, (eventuell unterschiedliche) Funktionen (z.B. saugen, wischen) einzelner Teilbereiche einer Karte zuzuordnen, welche dann von einem Reinigungsgerät autonom abgearbeitet werden können. In US 2009/0182464 A1 von Samsung wird die verfügbare Karte in Teilbereiche zerlegt, welche nachfolgend sequentiell gereinigt werden.

Eine Grundvoraussetzung für Roboter, welche Karten permanent speichern ist, dass sich der Roboter autonom in der permanenten Karte lokalisieren kann, ohne oder mit nur sehr begrenztem Vorwissen über seine tatsächliche Position relativ zur Karte. Diese Fähigkeit wird auch als globale Selbstlokalisierung (engl. global self localization) bezeichnet. Ein solches Verfahren ist beispielsweise in "Active Global Localization for a Mobile Robot using Multiple Hypothesis Tracking", IEEE Transactions on Robotics and Automation, 2001 beschrieben.

Eine Selbstlokalisierung, welche nach einem derartigen Verfahren durchgeführt wird, kann jedoch, je nach Größe und Anzahl der vorhandenen Karten, sehr lange dauern. Während dieser Zeit ist der Roboter für seine eigentliche Aufgabe, zum Beispiel einen Zielpunkt anzufahren, zum Teil außer Betrieb gesetzt, wodurch die Aufgabenabarbeitung verzögert wird.

Die der Erfindung zugrunde liegende Aufgabe besteht nun darin einen autonomen Roboter zur Verfügung zu stellen, der eine Selbstlokalisierung möglichst sollen, insbesondere nur dann, wenn es sich als notwendig erweist, durchführt, um Zeit und Energie für die eigentliche Aufgabenabarbeitung zu sparen.

### Zusammenfassung der Erfindung

Diese genannte Aufgabe wird durch einen mobilen Roboter gemäß Anspruch 1 gelöst. Unterschiedliche Beispiele und Weiterentwicklungen der Erfindung sind Gegenstand der abhängigen Ansprüche.

Im Folgenden wird ein mobiler, selbstfahrender Roboter zum autonomen Ausführen von Tätigkeiten beschrieben. Gemäß einem Beispiel der Erfindung weist der Roboter folgendes auf: ein Antriebsmodul zur Bewegung des Roboters über die Bodenfläche, ein Bearbeitungsmodul zum Ausführen der Tätigkeiten während eines Bearbeitungsvorganges; mindestens ein Sensormodul zum Erfassen von Informationen betreffend die Struktur der Umgebung und/oder betreffend die Bodenfläche; ein Detektormodul, welches dazu ausgebildet ist, anhand von Sensordaten ein Versetzen des Roboters vor oder während eines Bearbeitungsvorganges zu detektieren; und ein Navigationsmodul, welches dazu ausgebildet ist, den Roboter während des Bearbeitungsvorganges anhand einer Karte der Umgebung über die Bodenfläche zu navigieren, eine oder mehrere Karten der Umgebung abzuspeichern und zu verwalten, und eine Selbstlokalisierung durchzuführen, wenn das Detektormodul ein Versetzen des Roboters detektiert hat, wobei bei der Selbstlokalisierung - ohne oder mit nur begrenztem Vorwissen über die tatsächliche Position des Roboters relativ zur Karte - detektiert wird, ob und wo der Roboter sich innerhalb der gespeicherten Karten befindet, wobei anhand von den Sensordaten, anhand derer das Detektormodul das Versetzen des Roboters detektiert, ermittelt wird, mit welcher Wahrscheinlichkeit der Roboter sich noch innerhalb derselben Karte befindet wie vor dem Versetzen.

Des Weiteren wird ein Verfahren zur automatischen Ausführung von Tätigkeiten mit Hilfe eines selbstfahrenden, autonomen Roboters beschrieben. Gemäß einem Beispiel der Erfindung weist das Verfahren folgendes auf: Speichern und Verwalten wenigstens einer Karte der Umgebung; Starten des Bearbeitungsvorganges und Ausführen der Tätigkeiten mit Hilfe eines am Roboter angeordneten Bearbeitungsmoduls; Navigieren des Roboters über die Bodenfläche während des Bearbeitungsvorganges anhand einer Karte der Umgebung; Erfassen von Informationen betreffend die Struktur der Umgebung und/oder betreffend die Bodenfläche während des Bearbeitungsvorganges durch mindestens ein am oder im Roboter angeordnetes Sensormodul; Durchführen einer Selbstlokalisierung, wenn ein am oder im Roboter angeordnetes Detektormodul anhand von Sensordaten detektiert, dass der Roboter versetzt wurde, wobei bei der Selbstlokalisierung - ohne oder mit nur begrenztem Vorwissen über die tatsächliche Position des Roboters relativ zur Karte - detektiert wird, ob und wo der Roboter sich innerhalb der gespeicherten Karten befindet; Ermitteln - anhand von den Sensordaten, anhand derer das Detektormodul das Versetzen des Roboters detektiert - mit welcher Wahrscheinlichkeit der Roboter sich noch innerhalb derselben Karte befindet wie vor dem Versetzen.

Die im Zusammenhang mit der Bearbeitung einer Bodenfläche beschriebenen Beispiele und technischen Merkmale des mobilen Roboters sind auch auf einen mobilen Roboter zur Ausführung anderer oder zusätzlicher Tätigkeiten übertragbar. Die vom beschriebenen mobilen Roboter ausgeführten Tätigkeiten können beispielsweise auch die Bearbeitung von Bodenflächen, die Inspektion der Bodenfläche oder der Umgebung, den Transport von Gegenständen, die Reinigung von Luft und/oder das Ausführen von Unterhaltungsspielen umfassen. Ein Bearbeitungsmodul ist beispielsweise bei alleiniger Verwendung zur Inspektion nicht zwingend notwendig.

### Kurze Beschreibung der Abbildungen

Die folgenden Abbildungen und die weitere Beschreibung sollen helfen, die Erfindung besser zu verstehen. Die Elemente in den Abbildungen sind nicht unbedingt als Einschränkung zu verstehen, vielmehr wird Wert darauf gelegt, das Prinzip der Erfindung darzustellen. In den Abbildungen bezeichnen gleiche Bezugszeichen gleiche oder ähnliche Komponenten oder Signale mit gleicher oder ähnliche Bedeutung. In den Abbildungen zeigen:
- Figur 1: beispielhaft eine schematische isometrische Darstellung eines selbstfahrenden Roboters zur autonomen Reinigung von Bodenflächen;
- Figur 2: eine beispielhafte Darstellung eines selbstfahrenden Roboters zur autonomen Reinigung von Bodenflächen an verschiedenen Positionen in einem zu reinigenden Gebiet;
- Figur 3: anhand eines Blockschaltbildes beispielhaft den Aufbau eines erfindungsgemäßen Roboters zum autonomen Bearbeiten von Bodenflächen; und
- Figur 4: anhand eines Blockschaltbildes ein weiteres Beispiel eines erfindungsgemäßen Roboters zum autonomen Bearbeiten von Bodenflächen.

### Detaillierte Beschreibung

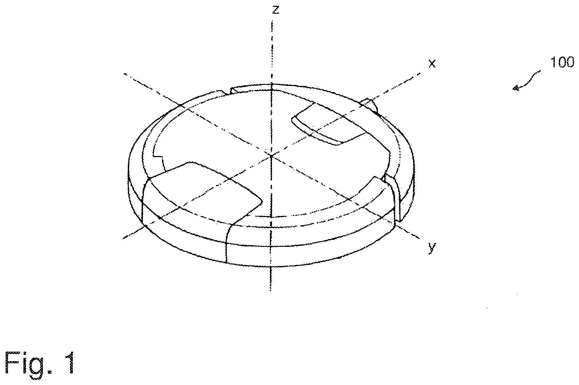

Figur 1 zeigt beispielhaft eine schematische isometrische Darstellung eines selbstfahrenden Roboters 100 zur autonomen Reinigung von Bodenflächen. Die Figur 1 zeigt auch ein kartesisches Koordinatensystem mit dem Ursprung in der Mitte des Roboters 100. Derartige Geräte sind häufig - jedoch nicht notwendigerweise - scheibenförmig ausgebildet. Die Hochachse z geht durch das Zentrum der Scheibe. Die longitudinale Achse ist mit x bezeichnet und die transversale Achse mit y.

Der Roboter 100 umfasst ein Antriebsmodul (nicht dargestellt), weiches z.B. Elektromotore, Getriebe und Räder aufweisen kann. Das Antriebsmodul kann z.B. dazu ausgebildet sein, den Roboter in Vorwärts- und Rückwärtsrichtung zu bewegen (in der Darstellung aus Fig. 1 wäre das entlang der x-Achse) und um die Hochachse zu drehen (in der Darstellung aus Fig. 1 wäre das die z-Achse). Somit kann der Roboter - theoretisch - jeden Punkt einer Bodenfläche (die parallel zu der durch die x-Achse und y-Achse definierten Ebene liegt) anfahren. Der Roboter umfasst des weiteren ein Bearbeitungsmodul, wie z.B. ein Reinigungsmodul, das dazu ausgebildet ist, die unter (und/oder neben) dem Roboter befindliche Bodenfläche zu reinigen. Beispielsweise werden Staub und Schmutzpartikel in einen Auffangbehälter gesaugt oder auf mechanische (oder irgendeine andere Weise) in diesen befördert. Derartige Roboter sind - als solche - bekannt und unterscheiden sich im Wesentlichen durch die Art der Navigation in der Umgebung und die "Strategie", die bei der Bearbeitung der Bodenfläche, wie z.B. bei einem Reinigungsvorgang, angewandt wird.

Es sind Roboter bekannt, welche ohne Erstellung bzw. Verwendung einer Karte auskommen. Bei derartigen, verhältnismäßig einfachen, Systemen werden in der Regel zufällige Navigationsverfahren verwendet. Es werden keine ortsbezogenen Informationen wie beispielsweise Informationen bezüglich Hindernissen oder Orientierungspunkten abgespeichert und während den Bearbeitungsvorgängen wieder verwendet. In Kombination mit lokalen Bewegungsstrategien wechseln solche Roboter in der Regel bei Kollision mit einem Hindernis (zufällig) die Fahrtrichtung. Auf diese Weise werden Bodenflächen in einem zu reinigenden Gebiet teilweise mehrfach gereinigt, während andere Bodenflächen möglicherweise gar nicht gereinigt werden.

Aus diesem Grund wurden kompliziertere Systeme entwickelt, welche eine Karte der Umgebung und gleichzeitig die entsprechende Position des Roboters in dieser Karte ermitteln. Derartige Verfahren sind bekannt und werden als SLAM-Verfahren bezeichnet (eng!.: Simultaneous Localization and Mapping, deutsch: simultane Lokalisierung und Kartenerstellung, siehe z.B. H. Durrant-Whyte and T. Bailey: Simultaneous Localization and Mapping (SLAM): Part I The Essential Algorithms," in: IEEE Robotics and Automation Magazine, Bd. 13, Nr. 2, S. 99-110, Juni 2006). Auf diese Weise wird eine gezielte Navigation ermöglicht. Die Karte und die Position des Roboters in der Karte kann dabei mittels einem oder mehrerer Sensoren ermittelt werden.

Bei einigen bekannten Systemen wird für jeden neuen Reinigungsvorgang eine neue Karte erstellt, die Karten sind also nicht permanent. Für den Roboter spielt es bei derartigen Systemen keine Rolle, ob er zwischen zwei Reinigungsvorgängen von einem Nutzer beispielsweise in einen anderen Raum versetzt wurde, da er bei jedem neuen Bearbeitungsvorgang automatisch eine neue Karte erstellt.

Mit Systemen, bei denen die durch den Roboter erstellten Karten permanent gespeichert und für nachfolgende Reinigungsvorgänge wieder verwendet werden, sind im Vergleich zu Systemen mit temporären Karten effizientere Bearbeitungsvorgänge möglich, da eine wiederholte Erkundung der Umgebung nicht notwendig ist. Zusätzlich können kartenbasierte Informationen ermittelt und wieder verwendet werden. So können beispielsweise stark verschmutzte Bereiche in der Karte markiert, und bei einem folgenden Reinigungsvorgang besonders behandelt werden. Auch benutzerspezifische Informationen wie beispielsweise Zimmerbezeichnungen können übernommen werden. Jedoch muss man bei einer Wiederverwendung von abgespeicherten Karten mit einem Versetzen des Roboters, beispielsweise in einen Bereich einer anderen abgespeicherten Karte, zwischen und insbesondere vor den Bearbeitungsvorgängen effizient umgehen können.

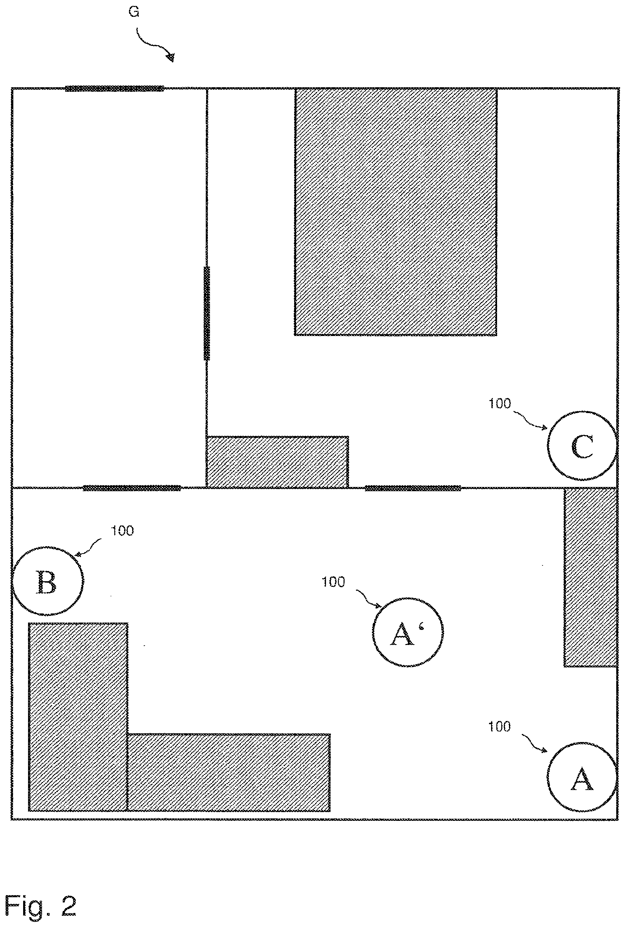

Figur 2 zeigt beispielhaft einen autonomen Roboter 100 an einer Position A innerhalb eines zu reinigenden Gebietes G. Das zu reinigende Gebiet G unterteilt sich dabei in verschiedene Zimmer, welche durch Türen miteinander verbunden sind. In den einzelnen Zimmern können sich dabei verschiedenartige Gegenstände (schraffierte Flächen) befinden. Beendet der Roboter 100 einen Reinigungsvorgang beispielsweise an der Position A, so speichert er in der Regel diese Position ab. Bei Beginn des nächsten Reinigungsvorgangs weiß der Roboter 100 somit, an welcher Stelle innerhalb der verwendeten Karte er sich befindet. Hierfür ist jedoch erforderlich, dass der Roboter 100 den nächsten Reinigungsvorgang wieder von der Position A aus startet. Wird der Roboter 100 jedoch vor dem nächsten Reinigungsvorgang beispielsweise an eine andere Position B im selben Zimmer oder auch eine Position C in einem anderen Zimmer des zu reinigenden Gebietes G versetzt, so stimmt die beim Beenden des vorherigen Reinigungsvorganges abgespeicherte Position A nicht mit der tatsächlichen Startposition B oder C des nächsten Reinigungsvorganges überein.

Ein Benutzer könnte den Roboter 100 auch während eines Reinigungsvorganges, beispielsweise von der Position A' aus, an eine andere Stelle B oder C versetzen. Der Roboter 100 müsste demnach den bereits begonnenen Reinigungsvorgang von einer anderen Position aus weiterführen. Hat der Roboter 100 mehrere Karten gespeichert, zum Beispiel eine Karte für jedes Stockwerk eines Gebäudes, so ist es auch möglich, dass der Roboter 100 nicht nur innerhalb einer Karte versetzt wird, sondern von einer Karte in eine andere.

Aus diesem Grund kann ein derartiger Roboter 100 in der Regel eine so genannte globale Selbstlokalisierung durchführen, bevor er mit einem Reinigungsvorgang beginnt. Globale Selbstlokalisierung (engl. "Global Selflocalization") bedeutet dabei, dass sich der Roboter 100 autonom in einer permanenten Karte, ohne oder nur mit sehr begrenztem Vorwissen über seine tatsächliche Position relativ zur Karte, lokalisiert. Dabei kann der Roboter 100 beispielsweise beginnen, eine neue, temporäre Karte durch Neuerkundung aktiv aufzubauen (engl. "Active Global Selflocalization"). Der Roboter 100 vergleicht dabei die neue temporäre Karte noch während des Aufbaus wiederholt mit allen gespeicherten Karten, bis eine ausreichende Sicherheit über eine erfolgreiche oder erfolglose Lokalisierung erreicht ist.

Der Roboter 100 ermittelt dabei autonom globale Lokalisierungshypothesen in den gespeicherten Karten. Das bedeutet, er prüft verschiedene Kriterien ab, um den aktuellen Standort eindeutig einer Position in der Karte zuordnen zu können. Der Roboter kann beispielsweise bestimmen in welcher Richtung und in welchem Abstand sich eine Tür, Wände oder bestimmte Möbelstücke befinden. Mit jedem erkannten Merkmal kann die Anzahl der möglichen Positionen eingeschränkt werden.

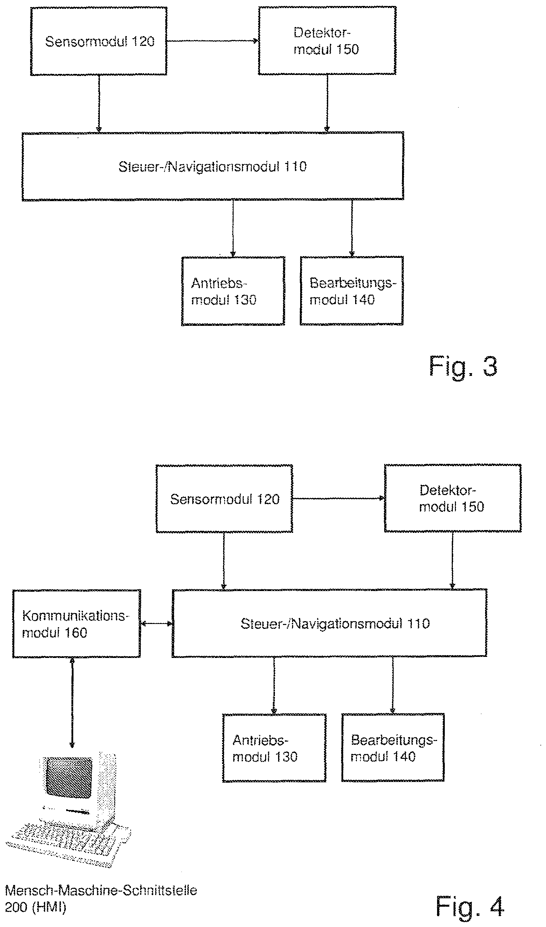

Figur 3 ist ein Blockschaltbild, das den schematischen Aufbau eines Beispiels eines erfindungsgemäßen Roboters zum autonomen Bearbeiten (z.B. Reinigen) von Bodenflächen illustriert. Es sind ein Antriebsmodul 130 und ein Bearbeitungsmodul 140 dargestellt, die bereits oben erwähnt wurden. Beide Module 130 und 140 werden von einem Steuer- und Navigationsmodul 110 (navigation and control module) kontrolliert. Das Navigationsmodul ist dazu ausgebildet, den Roboter während eines Reinigungsvorganges anhand einer Karte der Umgebung über die Bodenfläche zu navigieren. Die Karte ist dabei in einem Speicher des Steuer- und Navigationsmoduls 110 in Form von Kartendaten (map data) abgelegt. Zur Navigation in der Umgebung sind unterschiedliche Strategien zur Planung der Soll-Trajektorie des Roboters bekannt. Im Allgemeinen wird versucht, mit einer möglichst kurzen Trajektorie die zu bearbeitende (z.B. zu reinigende) Bodenfläche möglichst vollständig abzudecken, um eine flächendeckende Bearbeitung (z.B. Reinigung) zu gewährleisten.

Der Roboter 100 umfasst weiter ein Sensormodul 120 zum Erfassen von Informationen betreffend die Struktur der Umgebung und/oder betreffend Eigenschaffen der Bodenfläche. Zu diesem Zweck kann das Sensormodul eine oder mehrere Sensoreinheiten aufweisen, die dazu ausgebildet sind, Informationen zu erfassen, auf deren Basis eine Karte der Umgebung aufgebaut und die Position des Roboters auf der Karte lokalisiert werden kann. Zu diesem Zweck geeignete Sensoren sind z.B. Laser-Range-Scanner, Kameras, Triangulationssensoren, Berührungssensoren zum Erkennen eines Zusammenstoßes mit einem Hindernis, etc. Zum Aufbau der Karte und zur gleichzeitigen Positionsbestimmung des Roboters innerhalb der Karte kann, wie bereits beschrieben, ein SLAM-Verfahren eingesetzt werden.

Bei einer erfolgreichen Lokalisierung können die so neu aufgebaute (temporäre) Karte und die dieser entsprechende permanente Lokalisierungskarte sinnvoll zusammengeführt werden, um mögliche Unterschiede zu aktualisieren. So könnten beispielsweise bei der Lokalisierung neue Gegenstände vorhanden oder früher vorhandene Gegenstände entfernt worden sein. Die Lokalisierungshypothesen sollten hierbei eine ausreichend hohe Güte aufweisen, das heißt es sollte eine Mindestanzahl an eindeutigen Übereinstimmungen zwischen der neuen und der gespeicherten Karte gefunden worden sein.

Die Lokalisierung schlägt fehl, wenn keine Lokalisierung mit ausreichend hoher Güte erzielt werden kann. In einem solchen Fall kann der Roboter 100 beispielsweise aus den bei der Lokalisierung gewonnenen Daten eine Karte der momentanen Umgebung generierten und diese als neue Karte abspeichern. So steht auch eine derart gewonnene Karte für zukünftige Reinigungsvorgänge zur Verfügung.

Eine globale Selbstlokalisierung des Roboters 100 wird dabei autonom ausgelöst. Der Roboter 100 weist dafür beispielsweise ein Detektormodul 150 auf. Das Detektormodul 150 kann dabei als eigenes Modul ausgebildet sein, könnte aber beispielsweise auch in das Navigations- 110 oder das Sensormodul 120 integriert werden. Das Detektormodul 150 ist dazu ausgebildet zu detektieren, ob der Roboter 100 versetzt wird. Diese Detektion kann auf unterschiedliche Art und Weise geschehen. Beispielsweise könnte der Roboter 100 ein Hochheben, sowie ein anschließendes Zurücksetzen des Roboters 100 detektieren. Hierfür könnte der Roboter beispielsweise einen oder mehrere Kontaktschalter an federgelagerten Rädern (nicht gezeigt) aufweisen, durch welche das Hochheben sowie das nachfolgende Zurücksetzen detektiert werden kann. Eine weitere Möglichkeit wäre, dass sich ein inertialer Sensor, wie zum Beispiel ein Gyroskop, im Sensormodul 120 befindet. Inertiale Sensoren können translatorische und rotatorische Beschleunigungen messen. Beim Umsetzen des Roboters 100 würde dieser Sensor höhere Werte liefern als im Stillstand oder beim normalen Navigieren während eines Reinigungsvorganges. Mit diesen beispielhaften Lösungen wäre es möglich ein Versetzen des Roboters sowohl vor als auch während eines Reinigungsvorganges zu detektieren. Alternativ könnte das Hochheben durch sogenannte "Absturzsensoren" (auch als "cliff sensors" bezeichnet) werden. Im Wesentlichen handelt es sich dabei um eine Reflexlichtschranke (Reflex-Optokoppler), welche an der Geräteunterseite angeordnet ist (vorzugsweise am Rand, um z.B. die Kante einer Treppe zu detektieren), wobei der Lichtstrahl vom Boden reflektiert und zur Reflexlichtschranke zurückgeworfen wird. Beim Aufheben des Geräts kommt es zu keiner Reflexion mehr. Nach dem Zurücksetzen ist die Reflexion wieder da und eine Selbstlokalisation kann ausgelöst werden.

Der Roboter 100 könnte aber auch, nach dem Einschalten, mittels anderer im Sensormodul 120 befindlicher Sensoren detektieren, dass er sich nicht an der selben Position wie beim Ausschalten befindet. Hierfür müsste die Position beim Abschalten gespeichert werden. Sind die von den Sensoren gelieferten Daten beim Einschalten, beispielsweise Abstände zu Gegenständen welche zum Beispiel mittels Laser-Range-Scannern detektiert werden könnten, nicht konsistent mit der zuletzt abgespeicherten Position, so ist dies ein Hinweis darauf, dass der Roboter 100 versetzt wurde.

Wird also ein Versetzen des Roboters 100 detektiert, so wird automatisch eine globale Selbstlokalisierung ausgelöst. Auf diese Weise muss, wenn der Roboter 100 nicht versetzt wurde, nicht automatisch vor jedem neuen Reinigungsvorgang eine Selbstlokalisierung durchgeführt werden. Dies ist insbesondere dann vorteilhaft, wenn der Roboter 100 viele und/oder sehr komplexe Karten gespeichert hat, und die Selbstlokalisierung eine relativ lange Zeit in Anspruch nehmen würde. Des weiteren ist es möglich, ein Versetzen zu jedem Zeitpunkt, also auch während eines Reinigungsvorganges zu detektieren. Zur Detektion kann eines oder mehrere, und/oder andere als die oben dargestellten Verfahren verwendet werden.

Ebenso ist es möglich, dass der Roboter anhand der von den Sensoren oder Kontaktschaltern gelieferten Daten ermittelt, mit welcher Wahrscheinlichkeit er sich noch innerhalb der selben Karte befindet wie vor dem Versetzen. So kann der Roboter 100 beispielsweise eine Zeitmessung zwischen Hochheben und dem nachfolgenden Zurücksetzen durchführen. Ergibt sich einer solchen Zeitmessung eine lediglich kurze Zeitdauer, so kann der Roboter 100 mit relativ hoher Wahrscheinlichkeit davon ausgehen, dass er nur wenig aus seiner ursprünglichen Position versetzt wurde und sich noch innerhalb der selben Karte befindet. Im Gegensatz dazu steigt die Wahrscheinlichkeit, dass er sich in einer anderen Karte befindet, wenn die Zeitdauer zwischen dem Hochheben und dem nachfolgenden Zurücksetzen sehr lang ist.

Die Sensoreinheiten, welche die zum Aufbau der Karte notwendigen Umgebungsinformationen liefern, können beispielsweise auch dazu verwendet werden, auf einer vorhandenen Karte noch nicht verzeichnete Hindernisse zu erkennen. Berührungssensoren können eine Kollision detektieren, über Stromsensoren zur Messung des Laststromes der Antriebseinheit kann z.B. erkannt werden, wenn der Roboter (z.B. an den Fransen eines Teppichs) festhängt. Andere Sensoreinheiten können z.B. ein Feststecken des Roboters dadurch detektieren, dass die Antriebsräder durchdrehen. Es können weitere Sensoreinheiten vorgesehen sein, die z.B. dazu ausgebildet sind, den Verschmutzungsgrad des Bodens zu ermitteln. Die erfassten Umgebungsinformationen können zusammen mit einer der jeweiligen Information zugeordneten Position des Roboters auf der Karte an das Steuer- und Navigationsmodul 110 übermittelt werden.

Figur 4 zeigt ein weiteres Beispiel eines erfindungsgemäßen Roboters zum autonomen Bearbeiten von Bodenflächen. Ein Kornmunikationsmodul 150 ist hierbei dazu vorgesehen, eine Kommunikationsverbindung zu einer Mensch-Maschine-Schnittstelle 200 (human machine interface, HMI) herzustellen. Als Mensch-Maschine-Schnittstelle 200 kommt dabei ein Personal Computer (PC) in Betracht, es kann sich jedoch auch nur um ein Einfaches Display am Robotergehäuse handeln. Der Benutzer kann beispielsweise über einen PC oder über eine am Robotergehäuse angeordnete Taste einen Steuerbefehl eingegeben. Selbstverständlich sind auch andere Varianten einer Mensch-Maschine-Kommunikation bekannt. Diese Mensch-Maschine-Schnittstelle 200 ermöglicht, die gespeicherten Informationen mit den korrespondierenden Positionen für einen Benutzer darzustellen, und gibt damit diesem die Möglichkeit, in den Bearbeitungsvorgang (oder alternativ einen Inspektionsvorgang) einzugreifen oder Veränderungen der Umgebung vorzunehmen. Die Mensch-Maschine-Schnittstelle 200 ermöglicht durch die Eingabe eines Steuerbefehle durch den Benutzer, den Bearbeitungsvorgang (oder den Inspektionsvorgang) abzubrechen, zu modifizieren, fortzusetzen oder neu zu beginnen.

Der Benutzer könnte beispielsweise über die Mensch-Maschine-Schnittstelle 200 dem Roboter 100 den gewünschten Teilbereich oder eine Teilmenge der zu betrachtenden Karten mitteilen. Versetzt der Benutzer den Roboter beispielsweise aus dem Erdgeschoss in den ersten Stock, so kann er dies dem Roboter 100 beispielsweise über eine Benutzermeldung "1. Stock" mitteilen. Der Benutzer könnte dem Roboter 100 beispielsweise auch über eine Benutzermeldung "neue Karte" mitteilen, dass sich der Roboter 100 in einem Bereich befindet, für welchen noch keine Karte abgespeichert ist. Der Roboter 100 weiß somit, in welcher Karte er die Lokalisierung durchführen muss, oder ob er eine neue Karte erstellen muss. Bei sehr vielen gespeicherten Karten kann dies die Zeit, welche für die Lokalisierung benötigt wird erheblich verringern. Auch wenn sich, wie zum Beispiel in Hotels, die Zimmer in den verschiedenen Stockwerken sehr ähnlich sind, kann eine derartige Benutzereingabe die Lokalisierungszeiten deutlich verringern und die entsprechenden Erfolgsaussichten erhöhen.

Die Funktion eines erfindungsgemäßen Roboters 100 zum autonomen Bearbeiten von Bodenflächen wird im folgenden anhand von zwei Fallbeispielen näher erläutert.

Erstes Beispiel: Der Roboter beginnt mit einer Erkundung einer zweigeschossigen Wohnung im Erdgeschoss, erstellt dabei eine Karte des Erdgeschosses und speichert diese, nach Abschluss der Erkundung, unter "Karte 1" ab. Danach führt er einen Reinigungsvorgang von "Karte 1" durch und fährt nach Abschluss des Reinigungsvorgangs an seine Basisstation zurück. Danach benennt der Benutzer die abgespeicherte Karte "Karte 1" über eine Mensch-Maschine-Schnittstelle in "Erdgeschoss" um.

Während seines nächsten Reinigungsvorganges von "Erdgeschoss," wird der Roboter hochgehoben und in den ersten Stock der Wohnung versetzt. Der Roboter detektiert, dass er versetzt wurde (Hochheben gefolgt von Zurücksetzen), und löst eine globale Selbstlokalisierung aus. Dabei erstellt er durch Erkundung eine neue, vorerst temporäre, Karte und vergleicht diese wiederholt mit der Karte "Erdgeschoss". Da diese Lokalisierung fehlschlägt, führt der Roboter die Erkundung des ersten Stockes zu Ende und speichert anschließend die neue Karte unter "Karte 2" ab. Danach führt der Roboter einen Reinigungsvorgang von "Karte 2" durch. Der Benutzer benennt anschließend "Karte 2" wiederum über die Mensch-Maschine-Schnittstelle in "Erster Stock" um.

Bei einem nachfolgenden Versetzen des Roboters in das Erdgeschoss, kann sich der Roboter in "Erdgeschoss," lokalisieren und einen unter Umständen zuvor abgebrochenen Reinigungsvorgang derart zu Ende bringen, dass nur die zuvor noch nicht gereinigten Bereiche gereinigt werden. Im Weiteren wird nach jedem Versetzen des Roboters zwischen den Stockwerken eine globale Selbstlokalisierung in den Karten "Erdgeschoss" und "Erster Stock" ausgelöst. Dies erlaubt dem Benutzer einen flexiblen Einsatz des Roboters mit permanenten selbst erstellten Karten.

Zweites Beispiel: Der Roboter beginnt mit der Erkundung einer Wohnung, erstellt dabei eine Karte und speichert die Karte nach Abschluss der Erkundung unter "Karte 1" ab. Danach führt er einen Reinigungsvorgang von "Karte 1" durch und fährt, nachdem er diesen beendet hat, zu seiner Basisstation zurück. Danach gibt der Benutzer über eine Mensch-Maschine-Schnittstelle der erstellten Karte den Namen "Wohnung". Während seines nächsten Reinigungsvorganges schaltet der Benutzer den Roboter aus und trägt ihn, inklusive seiner Basisstation, in einen anderen Teil der Wohnung, um ein verschönertes Wohnungsbild zu erreichen. Anschließen schaltet der Benutzer den Roboter wieder ein. Der Roboter erkennt, dass er eingeschaltet wurde und detektiert anschließend, dass seine Sensordaten nicht zu seiner zuletzt abgespeicherten Position in der Karte "Wohnung" passen.

Dieses Ereignis löst eine globale Selbstlokalisierung des Roboters in "Wohnung" aus. Der Roboter erstellt wiederum eine neue (temporäre) Karte durch Erkundung, und vergleicht diese wiederholt mit "Wohnung". Bei erfolgreicher Lokalisierung in "Wohnung" werden die neue Karte und die Karte "Wohnung," sinnvoll in eine aktualisierte Karte "Wohnung" zusammengeführt.

Bei fehlgeschlagener Lokalisierung, zum Beispiel wenn der Benutzer, um das Wohnungsbild zu verbessern, auch derart viele große Gegenstände umgestellt hat, dass eine ausreichend sichere Lokalisierung nicht möglich ist, führt der Roboter die Neuerkundung zu Ende und speichert die neu erstellte Karte unter "Karte 2" ab. Der Benutzer hat dann die Möglichkeit, die bereits vorhandene Karte "Wohnung" zu löschen und "Karte 2" in "Wohnung," umzubenennen.

Die im Zusammenhang mit der Bearbeitung einer Bodenfläche beschriebenen Beispiele und technischen Merkmale des mobilen Roboters sind auch auf einen mobilen Roboter zur Ausführung anderer Tätigkeiten übertragbar. Alle Tätigkeiten, welche von autonomen selbstfahrenden Robotern übernommen werden können sind hierbei denkbar. Diese Tätigkeiten können beispielsweise die Inspektion der Bodenfläche oder der Umgebung, den Transport von Gegenständen, die Reinigung von Luft und/oder das Ausführen von Unterhaltungsspielen umfassen. Das beschriebene Bearbeitungsmodul 140 ist bei Robotern, welche andere oder zusätzliche Tätigkeiten als die Bearbeitung von Böden ausführen entsprechend ausgebildet. In manchen Fällen ist ein Bearbeitungsmodul 140 nicht notwendig, wie beispielsweise beim alleinigen Überwachen oder Inspizieren von Räumen, Flächen oder Gegenständen.

Während die Erfindung anhand einer beispielhaften Ausgestaltung beschrieben wurde, lässt sich die Erfindung demnach zusätzlich innerhalb des Grundgedankens und des Schutzumfang dieser Offenbarung modifizieren. Die vorliegende Anmeldung soll daher zahlreiche Varianten, Einsatzmöglichkeiten oder Adaptionen der Erfindung unter Verwendung von deren grundsätzliche Prinzipien abdecken. Außerdem ist die vorliegende Anmeldung dazu gedacht, derartige Abweichungen von der vorliegenden Offenbarung abzudecken, die bekannte oder übliche Praxis im Stand der Technik darstellen, auf dem die vorliegende Erfindung beruht. Die Erfindung ist nicht auf die oben angegebenen Einzelheiten beschränkt, sondern lässt sich gesäß den beigefügten Ansprüchen modifizieren.

## Patentansprüche

1. Mobiler selbstfahrender Roboter (100) zum autonomen Ausführen von Tätigkeiten; der Roboter weist folgendes auf:
ein Antriebsmodul (130) zur Bewegung des Roboters (100) über die Bodenfläche;
ein Bearbeitungsmodul (140) zum Ausführen der Tätigkeiten während eines Bearbeitungsvorganges;
mindestens ein Sensormodul (120) zum Erfassen von Informationen betreffend der Struktur der Umgebung;
ein Detektormodul (150), welches dazu ausgebildet ist, anhand von Sensordaten ein Versetzen des Roboters (100) vor oder während eines Bearbeitungsvorganges zu detektieren; und
ein Navigationsmodul (110), welches dazu ausgebildet ist den Roboter (100) während des Bearbeitungsvorganges anhand einer Karte der Umgebung über die Bodenfläche zu navigieren, und eine oder mehrere Karten der Umgebung abzuspeichern und zu verwalten,
**dadurch gekennzeichnet, dass** das Navigationsmodul weiter dazu ausgebildet ist, eine globale Selbstlokalisierung durchzuführen, wenn das Detektormodul (150) ein Versetzen des Roboters (100) detektiert hat, wobei bei der globalen Selbstlokalisierung - ohne oder mit nur begrenztem Vorwissen über die tatsächliche Position des Roboters (100) relativ zur Karte - detektiert wird, ob und wo der Roboter (100) sich innerhalb der gespeicherten Karten befindet, wobei anhand von den Sensordaten, anhand derer das Detektormodul (150) das Versetzen des Roboters (100) detektiert, ermittelt wird, mit welcher Wahrscheinlichkeit der Roboter (100) sich noch innerhalb derselben Karte befindet wie vor dem Versetzen.

2. Roboter (100) gemäß Anspruch 1, bei dem das Navigationsmodul (110) weiterhin dazu ausgebildet ist, basierend auf den vom Sensormodul (120) erfassten Daten eine neue Karte zu erstellen und abzuspeichern, wenn der Roboter (100) nicht innerhalb der gespeicherten Karten lokalisiert wird.

3. Roboter (100) gemäß Anspruch 1 oder 2, bei dem das Navigationsmodul (110) die globale Selbstlokalisation durchführt, indem anhand der gespeicherten Karten globale Lokalisierungshypothesen bezüglich des Standorts des Roboters aufgestellt werden, wobei bei der Aufstellung der globalen Lokalisierungshypothesen geprüft wird, ob ein aktueller Standort einer Position in der Karte zugeordnet werden kann.

4. Roboter (100) gemäß Anspruch 3, bei dem das Navigationsmodul (110) eine Güte der Lokalisierungshypothesen in den gespeicherten Karten ermittelt.

5. Roboter (100) gemäß einem der Ansprüche 1 bis 4, der weiterhin ein Kommunikationsmodul (160) aufweist, welches dazu ausgebildet ist, eine Verbindung mit einer Mensch-Maschine-Schnittstelle (200) herzustellen, um über diese Verbindung Benutzereingaben entgegenzunehmen.

6. Roboter (100) gemäß einem der vorangehenden Ansprüche, bei dem das Detektormodul (150) dazu ausgebildet ist, ein Versetzen des Roboters (100) zu detektieren, indem ein Hochheben und nachfolgendes Zurücksetzen des Roboters (100) detektiert wird.

7. Roboter (100) gemäß Anspruch 6, wobei der Roboter (100) weiterhin wenigstens einen Kontaktschalter an federgelagerten Rädern aufweist und/oder eine an der Unterseite des Roboters angeordnete Reflexlichtschranke, die einen am Boden reflektierbaren Strahl aussendet, durch welchen ein Hochheben und nachfolgendes Zurücksetzen des Roboters (100) detektiert werden kann.

8. Roboter (100) gemäß einem der vorangehenden Ansprüche, bei dem das Sensormodul (120) einen inertialen Sensor aufweist zum Erfassen von Bewegungen des Roboters (100), wobei das Detektormodul (150) ein Versetzen des Roboters (100) anhand der erfassten Bewegungen detektiert.

9. Roboter (100) gemäß einem der vorangehenden Ansprüche, bei dem die vor dem Abschalten vom Sensormodul (120) erfassten Informationen gespeichert werden und ein Versetzen des Roboters detektiert wird, wenn die beim erneuten Einschalten vom Sensormodul (120) erfassten Informationen von den gespeicherten Informationen abweichen.

10. Roboter (100) gemäß einem der vorangehenden Ansprüche, bei dem die autonom ausgeführten Tätigkeiten das Bearbeiten von Bodenflächen und/oder die Inspektion einer Umgebung oder von in der Umgebung befindlichen Gegenständen und/oder den Transport von Gegenständen und/oder die Reinigung von Luft umfassen.

11. Verfahren zur automatischen Ausführung von Tätigkeiten mit Hilfe eines selbstfahrenden autonomen Roboters (100); das Verfahren umfasst folgendes:
Speichern und Verwalten wenigstens einer Karte der Umgebung;
Starten des Bearbeitungsvorganges und Ausführen der Tätigkeiten mit Hilfe eines am Roboter (100) angeordneten Bearbeitungsmoduls (140);
Navigieren des Roboters über die Bodenfläche während des Bearbeitungsvorganges anhand einer Karte der Umgebung;
Erfassen von Informationen betreffend die Struktur der Umgebung während des Bearbeitungsvorganges durch mindestens ein am oder im Roboter (100) angeordnetes Sensormodul (120); **gekennzeichnet durch**
Durchführen einer globalen Selbstlokalisierung, wenn ein am oder im Roboter (100) angeordnetes Detektormodul (150) anhand von Sensordaten detektiert, dass der Roboter (100) versetzt wurde, wobei bei der globalen Selbstlokalisierung - ohne oder mit nur begrenztem Vorwissen über die tatsächliche Position des Roboters (100) relativ zur Karte - detektiert wird, ob und wo der Roboter (100) sich innerhalb der gespeicherten Karten befindet, und
Ermitteln - anhand von den Sensordaten, anhand derer das Detektormodul (150) das Versetzen des Roboters (100) detektiert - mit welcher Wahrscheinlichkeit der Roboter (100) sich noch innerhalb derselben Karte befindet wie vor dem Versetzen.

12. Verfahren gemäß Anspruch 11, wobei basierend auf den vom Sensormodul (120) erfassten Daten eine neue Karte erstellt und abgespeichert wird, wenn der Roboter (100) nicht innerhalb der gespeicherten Karten lokalisiert wird.

13. Verfahren gemäß Anspruch 11 oder 12, bei dem durch das Detektormodul (150) ein Hochheben und nachfolgendes Zurücksetzen des Roboters (100) detektiert wird.

14. Verfahren gemäß einem der Ansprüche 11 bis 13, bei dem das Sensormodul (120) einen inertialen Sensor zum Erfassen von Bewegungen des Roboters (100) aufweist, wobei das Detektormodul (150) ein Versetzen des Roboters (100) anhand der erfassten Bewegungen detektiert.

15. Verfahren gemäß einem der Ansprüche 11 bis 14, das weiter aufweist:
Speichern der vor dem Abschalten vom Sensormodul (120) erfassten Informationen und
Detektieren eines Versetzens des Roboters durch das Detektormodul (!50), wenn die beim erneuten Einschalten vom Sensormodul (120) erfassten Informationen von den gespeicherten Informationen abweichen.

## Claims

1. Mobile self-propelling robot (100) for performing activities autonomously; the robot comprising:
a drive module (130) for moving the robot (100) over the floor area;
a processing module (140) for performing the activities during a processing operation;
at least one sensor module (120) for collecting information concerning the structure of the environment;
a detector module (150), which is designed to detect a displacement of the robot (100) before or during a processing operation by means of sensor data; and
a navigation module (110), which is designed to navigate the robot (100) over the floor area during the processing operation with the help of a map of the environment, and to memorize and manage one or several maps of the environment,
**characterized in that** the navigation module is further designed to perform a global self-localization, when the detector module (150) has detected a displacement of the robot (100), wherein during the global self-localization - without or with only limited previous knowledge of the exact position of the robot (100) relative to the map - it is detected whether and where the robot (100) is located inside the memorized maps, wherein, by means of the sensor data by means of which the detector module (150) detects the displacement of the robot (100), it is determined the probability with which the robot (100) is still within the same map as before the displacement.

2. Robot (100) according to claim 1, wherein the navigation module (110) is further designed to generate and memorize a new map based on the data collected by the sensor module (120), when the robot (100) is not localized inside the memorized maps.

3. Robot (100) according to claim 1 or 2, wherein the navigation module (110) performs the global self-localization by formulating global localization hypotheses about the location of the robot with the help of the memorized maps, wherein during the formulation of the global localization hypotheses it is checked whether a current location can be assigned to a position on the map.

4. Robot (100) according to claim 3, wherein the navigation module (110) determines a quality of the localization hypotheses on the memorized maps.

5. Robot (100) according to one of the claims 1 to 4, further comprising a communication module (160), which is designed to establish a connection with a human-machine interface (200) in order to receive user input over that connection.

6. Robot (100) according to one of the previous claims, wherein the detector module (150) is designed to detect a displacement of the robot (100) by detecting a lifting up and a subsequent lifting back of the robot (100).

7. Robot (100) according to claim 6, wherein the robot (100) further comprises at least one contact switch on spring mounted wheels and/or a reflection light barrier arranged on the lower surface of the robot and emitting a beam liable to reflect on the ground, with which a lifting up and a subsequent lifting back of the robot (100) can be detected.

8. Robot (100) according to one of the previous claims, wherein the sensor module (120) comprises an inertial sensor for capturing movements of the robot (100), wherein the detector module (150) detects a displacement of the robot (100) with the help of the captured movements.

9. Robot (100) according to one of the previous claims, wherein the information collected by the sensor module (120) before the shutdown are saved and a displacement of the robot is detected, when the information collected by the sensor module (120) when turned back on differ from the saved information.

10. Robot (100) according to one of the previous claims, wherein the autonomously performed activities comprise the processing of floor areas and/or the inspection of an environment or of objects located in the environment and/or the transport of objects and/or the cleaning of air.

11. Method for performing activities autonomously with the help of a mobile self-propelling robot (100); the method comprising:
saving and managing at least one map of the environment;
starting the processing operation and performing the activities with the help of a processing module (140) arranged on the robot (100);
navigating the robot over the floor area during the processing operation with the help of a map of the environment;
collecting information concerning the structure of the environment during the processing operation by at least one sensor module (120) arranged on or in the robot (100);
**characterized in**
performing a global self-localization when a detector module (150) arranged on or in the robot (100) detects by means of sensor data that the robot (100) was displaced, wherein during the global self-localization - without or with only limited previous knowledge of the exact position of the robot (100) relative to the map - it is detected whether and where the robot (100) is located inside the memorized maps, and
determining - by means of the sensor data by means of which the detector module (150) detects the displacement of the robot (100) - the probability with which the robot (100) is still within the same map as before the displacement.

12. Method according to claim 11, wherein based on the data collected by the sensor module (120) a new map is generated and memorized, when the robot (100) is not localized inside the memorized maps.

13. Method according to claim 11 or 12, wherein a lifting up and a subsequent lifting back of the robot (100) is detected by the detector module (150).

14. Method according to one of the claims 11 to 13, wherein the sensor module (120) comprises an inertial sensor for capturing movements of the robot (100), wherein the detector module (150) detects a displacement of the robot (100) with the help of the captured movements.

15. Method according to one of the claims 11 to 14, further comprising:
saving of the information collected by the sensor module (120) before the shutdown and
detecting a displacement of the robot by the detector module (150), when the information collected by the sensor module (120) when turned back on differ from the saved information.

## Revendications

1. Robot (100) mobile automoteur pour effectuer des activités de manière autonome ; le robot comprenant :
un module d'entraînement (130) pour déplacer le robot (100) sur la surface du sol ;
un module de traitement (140) pour effectuer les activités durant une opération de traitement ;
au moins un module capteur (120) pour recueillir des informations concernant la structure de l'environnement ;
un module détecteur (150), lequel est destiné à détecter à l'aide de données de capteur un déplacement du robot (100) avant ou pendant une opération de traitement ; et
un module de navigation (110), lequel est destiné à naviguer le robot (100) sur la surface du sol pendant l'opération de traitement à l'aide d'une carte de l'environnement, et à sauvegarder et à gérer une ou plusieurs cartes de l'environnement,
**caractérisé en ce que**
le module de navigation est également destiné à effectuer une auto-localisation globale, quand le module de détection (150) a détecté un déplacement du robot (100), et que pendant l'auto-localisation globale - sans connaissance préalable ou seulement avec une connaissance préalable limitée de la position réelle du robot (100) par rapport à la carte - on détecte si et où le robot (100) se trouve à l'intérieur des cartes sauvegardées, et que, à l'aide des données de capteur à l'aide desquelles le module de détection (150) détecte le déplacement du robot (100), on détermine la probabilité avec laquelle le robot (100) se trouve encore à l'intérieur de la même carte qu'avant le déplacement.

2. Robot (100) selon la revendication 1, le module de navigation (110) étant également destiné à générer et sauvegarder une nouvelle carte à partir des données recueillies par le module capteur (120), quand le robot (100) n'est pas localisé à l'intérieur des cartes sauvegardées.

3. Robot (100) selon la revendication 1 ou 2, le module de navigation (110) effectuant l'auto-localisation globale en formulant des hypothèses de localisation globale quant à l'emplacement du robot à l'aide des cartes sauvegardées, selon lequel durant la formulation des hypothèses de localisation globale on vérifie si l'emplacement actuel peut être attribué à une position sur la carte.

4. Robot (100) selon la revendication 3, le module de navigation (110) déterminant un facteur de qualité des hypothèses de localisation sur les cartes sauvegardées.

5. Robot (100) selon l'une des revendications 1 à 4, comprenant également un module de communication (160), lequel est destiné à établir une connexion avec une interface homme-machine (200) afin de recevoir des entrées utilisateur grâce à cette connexion.

6. Robot (100) selon l'une des revendications précédentes, le module détecteur (150) étant destiné à détecter un déplacement du robot (100) en détectant un soulèvement et une dépose subséquente du robot (100).

7. Robot (100) selon la revendication 6, le robot (100) comprenant également au moins un interrupteur de contact sur des roues à ressorts et/ou un système reflex disposé en-dessous du robot et émettant un rayon susceptible d'être réfléchi sur le sol, grâce auquel un soulèvement et une dépose subséquente du robot (100) peuvent être détectés.

8. Robot (100) selon l'une des revendications précédentes, le module capteur (120) possédant un capteur inertiel pour saisir des mouvements du robot (100), le module détecteur (150) détectant un déplacement du robot (100) à l'aide des mouvements saisis.

9. Robot (100) selon l'une des revendications précédentes, les informations saisies par le module capteur (120) avant l'arrêt étant sauvegardées et un déplacement du robot étant détecté quand les informations saisies par le module capteur (120) pendant une nouvelle mise en marche diffèrent des informations sauvegardées.

10. Robot (100) selon l'une des revendications précédentes, les activités effectuées de manière autonome comprenant le traitement des surfaces de sol et/ou l'inspection d'un environnement ou des objets se trouvant dans l'environnement et/ou le transport d'objets et/ou le nettoiement d'air.

11. Méthode pour effectuer des activités de manière autonome à l'aide d'un robot (100) mobile automoteur ; la méthode comprenant :
la sauvegarde et la gestion d'au moins une carte de l'environnement ;
le démarrage d'une opération de traitement et l'exécution des activités à l'aide d'un module de traitement (140) situé sur le robot (100) ;
la navigation du robot sur la surface du sol pendant l'opération de traitement à l'aide d'une carte de l'environnement ;
la saisie d'informations concernant la structure de l'environnement pendant l'opération de traitement par au moins un module capteur (120) situé sur ou dans le robot (100) ; **caractérisée par**
l'application d'une auto-localisation globale, quand un module de détection (150) situé sur ou dans le robot (100) détecte à l'aide de données de capteur que le robot (100) a été déplacé, tandis que pendant l'auto-localisation globale - sans connaissance préalable ou seulement avec une connaissance préalable limitée de la position réelle du robot (100) par rapport à la carte - on détecte si et où le robot (100) se trouve à l'intérieur des cartes sauvegardées, et
le fait de déterminer - à l'aide des données de capteur à l'aide desquelles le module de détection (150) détecte le déplacement du robot (100) - la probabilité avec laquelle le robot (100) se trouve encore à l'intérieur de la même carte qu'avant le déplacement.

12. Méthode selon la revendication 11, une nouvelle carte étant générée et sauvegardée à partir des données recueillies par le module capteur (120), quand le robot (100) n'est pas localisé à l'intérieur des cartes sauvegardées.

13. Méthode selon la revendication 11 ou 12, un soulèvement et une dépose subséquente du robot (100) étant détectés par le module détecteur (150).

14. Méthode selon l'une des revendications 11 à 13, le module capteur (120) possédant un capteur inertiel pour saisir des mouvements du robot (100), le module détecteur (150) détectant un déplacement du robot (100) à l'aide des mouvements saisis.

15. Méthode selon l'une des revendications 11 à 14, comprenant également :
la sauvegarde des informations saisies par le module capteur (120) avant l'arrêt et
la détection d'un déplacement du robot par le module détecteur (150) quand les informations saisies par le module capteur (120) pendant une nouvelle mise en marche diffèrent des informations sauvegardées.
